(19) Europäisches Patentamt
European Patent Office
Office européen des brevets

(11) Veröffentlichungsnummer: **0 393 547 B1**

(12) **EUROPÄISCHE PATENTSCHRIFT**

(45) Veröffentlichungstag der Patentschrift: **18.11.93**

(51) Int. Cl.$^5$: **C08L 33/04**, C08L 33/06, C08L 27/06

(21) Anmeldenummer: **90107150.6**

(22) Anmeldetag: **14.04.90**

Die Akte enthält technische Angaben, die nach dem Eingang der Anmeldung eingereicht wurden und die nicht in dieser Patentschrift enthalten sind.

# (54) Thermoplastische Formmassen auf Basis von Vinylchlorid.

(30) Priorität: **20.04.89 DE 3912974**

(43) Veröffentlichungstag der Anmeldung: **24.10.90 Patentblatt 90/43**

(45) Bekanntmachung des Hinweises auf die Patenterteilung: **18.11.93 Patentblatt 93/46**

(84) Benannte Vertragsstaaten: **BE DE ES FR GB IT NL SE**

(56) Entgegenhaltungen:
**EP-A- 0 093 854**
**EP-A- 0 358 180**
**DE-A- 2 916 170**
**FR-A- 2 557 573**

(73) Patentinhaber: **BASF Aktiengesellschaft**
**Carl-Bosch-Strasse 38**
**D-67063 Ludwigshafen(DE)**

(72) Erfinder: **Hungenberg, Klaus-Dieter, Dr.**
**Ortsstrasse 135**
**D-6943 Birkenau(DE)**
Erfinder: **Bueschl, Rainer, Dr.**
**Hollandstrasse 14**
**D-6701 Roedersheim-Gronau(DE)**

**EP 0 393 547 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft thermoplastische Formmassen aus Polymerisaten auf Basis von Vinylchlorid, enthaltend 2 bis 80 Gew.% eines Polymerisates aus

a) 2 bis 100 Gew.% eines Monomeren der allgemeinen Formel I,

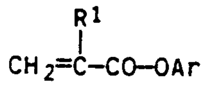

I

in der

$R^1$ Wasserstoff oder einen $C_1$-$C_4$-Alkylrest bedeutet und

Ar für eine isoaromatische Gruppe,

ausgewählt aus der Gruppe bestehend aus Phenyl-, $\alpha$-, $\beta$-Naphthyl-, Diphenyl-, p-Benzoylphenyl-, p-($\omega$-Phenylalkyl)estern der Acryl- und Methacrylsäure, wobei die aromatischen Kerne gewünschtenfalls mit Alkyl-, Alkoxy-, Nitro-, Nitrilgruppen oder Halogenatomen substituiert sein können, steht,

oder aus Gemischen dieser Monomeren, und

b) 0 bis 98 Gew.% eines Monomeren der allgemeinen Formel II,

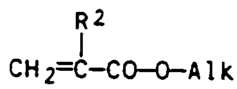

II

in der

$R^2$ einen $C_1$-$C_4$-Alkylrest und

Alk einen $C_1$-$C_8$-Alkylrest bedeutet,

oder aus Gemischen dieser Monomeren, sowie

c) 0 bis 5 Gew.% weiterer radikalisch polymerisierbarer Monomere (Monomere III).

Zur Erhöhung der Erweichungstemperatur von Homo- und Mischpolymerisaten des Polyvinylchlorids werden diesen Polymerisaten Modifizierungsmittel zugesetzt, bei denen es sich meist um Homo- oder Copolymerisate von Sauerstoff oder Stickstoff enthaltenden polaren Monomeren handelt.

So werden in der GB-B 1 400 848 thermoplastische Formmassen auf Basis von Polyvinylchlorid beschrieben, die als Zusatzstoffe zur Erhöhung der Erweichungstemperatur Copolymerisate aus Acrylnitril und $\alpha$-Methylstyrol enthalten. Da technische Polymerisate dieser Art stets noch etwas freies Acrylnitril enthalten, ist der Einsatz beschränkt. Vor allem im Lebensmittelbereich ist die Verwendung solcher Formmassen wegen der Toxizität des Acrylnitrils problematisch.

Aus der DE-A 1 911 465 sind Pfropfcopolymeriate auf Basis von Polyvinylchlorid bekannt, die durch Mischen von Polyvinylchlorid und Polymerisaten olefinisch ungesättigter Verbindungen wie Polymethylmethacrylat in Gegenwart eines Initiators erhalten werden, jedoch lassen sich solche Pfropfcopolymerisate nur bedingt in gleichbleibender Qualität reproduzieren.

Aus der DE-A 29 16 170 ist eine Polarisationsfolie aus einem Polymergemisch aus einem Polymerisat, das durch teilweise Dehydrohalogenierung eines halogenierten Vinyl- oder Vinylidenpolymerisates gebildete Polyenketten enthält, und einem Polymerisat oder mehreren Polymerisaten aus der aus Acrylat- und Methacrylatpolymerisaten bestehenden Gruppe beschrieben. Nachteilig an diesen Massen ist ihre ungenügende Wärmeformbeständigkeit.

Aufgabe der vorliegenden Erfindung war es, den geschilderten Mängeln abzuhelfen.

Demgemäß wurden die eingangs definierten thermoplastischen Formmassen auf Basis von Polyvinylchlorid gefunden.

Homo- und/oder Copolymerisate von Aryl- und/oder Alkylestern der Acrylsäure und von Alkylacrylsäuren sind bekannt oder nach bekannten Methoden erhältlich (vgl. Krause et al., J. Polymer Sci., A. 3, 3573 (1965)).

Die Menge an den Monomeren I beträgt 2 bis 100, vorzugsweise 5 bis 75 Gew.%

Als Monomere I kommen ein- oder mehrkernige Isoarylester der Acrylsäure und/oder von Alkylacrylsäuren in Betracht. Geeignete einkernige sind beispielsweise Acrylsäurephenylester oder Methacrylsäurephenylester. Geeignete mehrkernige Acrylsäureester sind beispielsweise Acrylsäure-$\alpha$-naphthylester, Acrylsäure-$\beta$-naphthylester, Acrylsäurediphenylester, Acrylsäure-p-benzoylphenylester oder Acrylsäure-p-(ω-phenylalkyl)-phenylester wie Acrylsäure-p-(-4-phenylbutyl)-phenylester. Als mehrkernige Methacrylsäureester kommen Methacrylsäurediphenylester, Methacrylsäure-α- oder -β-naphthylester, Methacrylsäure-p-benzoylphenylester oder Methacrylsäure-p-(ω-phenylalkyl)-phenylester in Betracht.

Die aromatischen Kerne können auch Substituenten tragen, beispielsweise Alkyl- oder Alkoxygruppen, Nitrogruppen, Nitrilgruppen oder Halogenatome.

Vorzugsweise werden Acrylsäure-β-naphthylester, Acrylsäurediphenylester, Methacrylsäure-β-naphthylester und Methacrylsäurediphenylester verwendet.

An den Monomeren II werden 0 bis 98, vorzugsweise 25 bis 95 Gew.% eingesetzt.

Als Monomere II kommen $C_1$-$C_8$-Alkylester der Acrylester und/oder von $C_1$-$C_4$-Alkylacrylsäuren in Betracht, beispielsweise Methylacrylat, Ethylacrylat, Butylacrylat, Ethylmethacrylat, Cyclohexylmethacrylat, t-Butylmethacrylat, vorzugsweise jedoch Methylmethacrylat.

Zusätzlich können noch 0 bis 5 Gew.% weiterer radikalisch polymerisierbarer Monomere III copolymerisiert werden, beispielsweise vinylaromatische Verbindungen wie Styrol oder α-Methylstyrol oder substituierte Maleinimide wie Phenyl- oder Methylmaleinimid.

Die Polymerisate können in an sich bekannter Weise durch Emulsions-, Substanz-, Lösungs- oder Suspensionspolymerisation hergestellt werden.

Die Herstellung durch Emulsionspolymerisation erfolgt zweckmäßigerweise bei Temperaturen zwischen 30 und 95 °C. Als Initiatoren können thermisch zerfallende wasserlösliche Initiatoren wie Natriumperoxodisulfat oder Ammoniumperoxodisulfat oder auch Redox-Systeme wie t-Butylhydroperoxid/Natriumformaldehydsulfoxylat verwendet werden.

Als Emulgatoren kommen die üblichen Verbindungen in Betracht, beispielsweise die Alkalisalze von Fettsäuren, Natriumalkylsulfonate oder o-Dodecyldiphenyletherdisulfonat.

Bei der Herstellung durch Substanzpolymerisation kann man öllösliche Initiatoren (Radikalstarter) wie Diacylperoxide, Perester, Peroxydicarbonate oder Azoverbindungen wie Azo-bis-isobutyronitril verwenden. Die Polymerisationstemperatur liegt zwischen 60 und 200 °C, vorzugsweise zwischen 80 und 150 °C. Zur Regulierung des Molgewichts können beispielsweise Mercaptane zugesetzt werden.

Die Herstellung der Polymerisate kann auch durch Lösungspolymerisation erfolgen. Geeignete Lösungsmittel sind beispielsweise Toluol, Xylol, Aceton oder Tetrahydrofuran. Im übrigen kann die Polymerisation unter den für die Substanzpolymerisation geschilderten Bedingungen durchgeführt werden.

Eine Herstellung der Polymerisate durch Suspensionspolymerisation ist ebenfalls möglich. Dabei können die Monomeren mit Hilfe von Schutzkolloiden wie Polyvinylpyrrolidon, Polyvinylalkohol oder Methylcellulose dispergiert werden.

Als Initiatoren kommen die für die Substanzpolymerisation beschriebenen öllöslichen Initiatoren in Betracht. Die Polymerisationstemperatur liegt üblicherweise im Bereich von 70 bis 200 °C.

Zusätzlich können den Polymerisationsgemischen übliche Hilfsstoffe wie Natriumdiphosphat oder Natriumpolyphosphat zugesetzt werden.

Die Aufarbeitung auf die Polymerisate kann z.B. durch Sprühtrocknung erfolgen oder durch Koagulation mit Fällmitteln oder Gefrierkoagulation mit anschließender Filtration und Trocknung.

Die Menge der erfindungsgemäß zu verwendenden Polymerisate beträgt 2 bis 80, vorzugsweise 10 bis 50 Gew.%, bezogen auf das Gesamtgewicht der thermoplastischen Formmasse.

Die Herstellung der thermoplastischen Formmassen kann nach üblichen Verfahren erfolgen (vgl. Kunststoff-Handbuch, Bd. 2/1, 2/2, 2. Auflage).

Die Formmassen können neben den erfindungsgemäß verwendeten Polymerisaten noch übliche Hilfsstoffe wie Stabilisatoren, Schlagzähmodifier, Gleitstoffe, Fällstoffe sowie Farbstoffe und Pigmente enthalten.

Die einzelnen Komponenten können in den üblichen Mischern (Extruder, Kneter, Walzen) gemischt und durch für Thermoplaste übliche Verarbeitungsmethoden wie Extrudieren, Spritzgießen, Kalandrieren, Pressen, Sintern, Hohlkörperblasen oder Tiefziehen in die gewünschte Form gebracht werden.

Die erfindungsgemäßen thermoplastischen Formmassen weisen gegenüber Formmassen aus reinem PVC bei vergleichbarer Transparenz eine erhöhte Wärmeformbeständigkeit auf.

Beispiel 1

Ein Gemisch aus 600 g destilliertem Wasser, 1 g Natriumperoxodisulfat, 1 g Natriumpyrophosphat, 6g eines Gemisches von Natriumsalzen von $C_{12}$-$C_{18}$-Alkylsulfonaten sowie 36 g Methylmethacrylat und 4 g 2-Naphthylmethacrylat wurde unter einer Stickstoffatmosphäre auf 70 °C erhitzt und 30 min bei dieser Temperatur gehalten. Anschließend wurde bei 70 °C eine Mischung aus 324 g Methylmethacrylat und 36 g 2-Naphthylmethacrylat während eines Zeitraums von 3 Stunden zugegeben. Danach wurde das Reaktionsgemisch auf 25 °C abgekühlt.

Die Aufarbeitung des Produktes erfolgte durch Gefrierkoagulation und Trocknung im Vakuum bei 50 °C.

Beispiel 2

Eine Mischung aus 400 g Tetrahydrofuran, 55 g Methylmethacrylat, 45 g Diphenylmethacrylat, 0,5 g $\alpha,\alpha'$-Azodiisobutyronitril und 0,2 g t-Dodecylmercaptan wurde 6 Stunden unter Rückfluß erhitzt. Anschließend wurde das Reaktionsgemisch abgekühlt und in Methanol eingerührt.

Das ausgefallene Reaktionsprodukt wurde abfiltriert und getrocknet.

Herstellung der thermoplastischen Formmassen

50 g PVC, K-Wert 61
50 g Copolymerisat (Beispiel 1, 2)
1 g Di-n-octylzinn-bis-thioglykolsäure-isooctylester
1 g Glycerindioleat
0,2 g Ester der Montansäuren mit Ethylenglykol und 1,3-Butandiol
wurden auf einem Walzwerk bei 180 °C 8 min gemischt. Das so erhaltene Gemisch wurde anschließend zu Platten gepreßt.

Preßbedingungen: bei 180 °C, 200 bar

3 min vorheizen
2 min pressen
3 min abkühlen
Die Bestimmung der Transparenz (Streulicht) erfolgte an 3 mm dicken Platten, die Bestimmung der Wärmeformbeständigkeit über die Vicat-Temperatur VST/B 150 nach DIN 53460 an 4 mm dicken Scheiben.

Zum Vergleich wurden reine PVC-Formkörper herangezogen.

Die Prüfergebnisse sind in der nachfolgenden Tabelle aufgelistet.

Tabelle

| Beispiel | Polymerisat Zusammens. [Gew.%] | Formmasssen-Zusammens. PVC K-Wert 61 [Gew.%] | Polymerisat [Gew.%] | Vicat B [°C] | Streulicht [%] | Tg [°C] |
|---|---|---|---|---|---|---|
| erfindungsgemäß | | | | | | |
| 1 | 10 NMA/90 MMA | 50 | 50 | 91,0 | 6,3 | 96 |
| 2 | 44 DMA/56 MMA | 50 | 50 | 96,6 | 5,7 | 100 |
| Zum Vergleich | | | | | | |
| A | 0 | 100 | 0 | 77,0 | 5,7 | 79 |

NMA: Naphthyl-methacrylat
DMA: Diphenylmethacrylat
MMA: Methylmethacrylat
Tg: Glastemperatur aus DSC-Messungen

**Patentansprüche**
**Patentansprüche für folgende Vertragsstaaten : BE, DE, FR, GB, IT, NL, SE**

1. Thermoplastische Formmassen aus 20 bis 98 Gew.-% Polyvinylchlorid und 2 bis 80 Gew.-% eines Polymerisates aus
   a) 2 bis 100 Gew.-% eines Monomeren der allgemeinen Formel I,

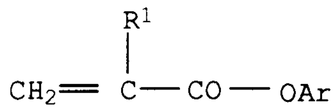

I

   in der
   $R^1$ Wasserstoff oder einen $C_1$-$C_4$-Alkylrest bedeutet und
   Ar ausgewählt ist aus der Gruppe bestehend aus Phenyl-, $\alpha$-, $\beta$-Naphthyl-, Diphenyl-, p-Benzoylphenyl-, p-($\omega$-Phenylalkyl)estern der Acryl- und Methacrylsäure, wobei die aromatischen Kerne gewünschtenfalls mit Alkyl-, Alkoxy-, Nitro-, Nitrilgruppen oder Halogenatomen substituiert sein können und
   b) 0 bis 98 Gew.-% eines Monomeren der allgemeinen Formel II,

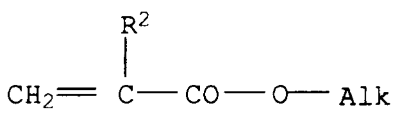

II

   in der
   $R^2$ einen $C_1$-$C_4$-Alkylrest und
   Alk einen $C_1$-$C_8$-Alkylrest bedeutet,
   oder aus Gemischen dieser Monomeren, sowie
   c) 0 bis 5 Gew.-% weiterer radikalisch polymerisierbarer Monomere (Monomere III).

2. Thermoplastische Formmassen nach Anspruch 1, enthaltend zusätzlich übliche Füllstoffe und sonstige Hilfsmittel.

3. Verfahren zur Herstellung von thermoplastischen Formmassen aus 20 bis 98 Gew.-% Polyvinylchlorid, dadurch gekennzeichnet, daß man diesen Formmassen 2 bis 80 Gew.-% eines Polymerisates aus
   a) 2 bis 100 Gew.-% eines Monomeren der allgemeinen Formel I,

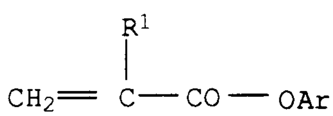

I

   in der
   $R^1$ Wasserstoff oder einen $C_1$-$C_4$-Alkylrest bedeutet und
   Ar ausgewählt ist aus der Gruppe bestehend aus Phenyl-, $\alpha$-, $\beta$-Naphthyl-, Diphenyl-, p-Benzoylphenyl-, p-($\omega$-Phenylalkyl)estern der Acryl- und Methacrylsäure, wobei die aromatischen Kerne gewünschtenfalls mit Alkyl-, Alkoxy-, Nitro-, Nitrilgruppen oder Halogenatomen substituiert sein können und

b) 0 bis 98 Gew.-% eines Monomeren der allgemeinen Formel II,

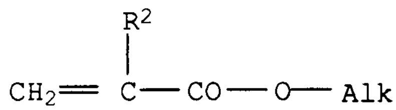

II

in der

$R^2$ einen $C_1$-$C_4$-Alkylrest und

Alk einen $C_1$-$C_8$-Alkylrest bedeutet,

oder aus Gemischen dieser Monomeren, sowie

c) 0 bis 5 Gew.-% weiterer radikalisch polymerisierbarer Monomere (Monomere III) zusetzt.

**4.** Verfahren zur Herstellung von thermoplastischen Formmassen nach Anspruch 3, dadurch gekennzeichnet, daß man zusätzlich übliche Füllstoffe und sonstige Hilfsmittel verwendet.

**5.** Verwendung der thermoplastischen Formmassen gemäß den Ansprüchen 1 oder 2 zur Herstellung von Formkörpern mit Ausnahme von Polarisationsfolien.

**Patentansprüche für folgenden Vertragsstaat : ES**

**1.** Verfahren zur Herstellung von thermoplastischen Formmassen aus 20 bis 98 Gew.-% Polyvinylchlorid, dadurch gekennzeichnet, daß man diesen Formmassen 2 bis 80 Gew.-% eines Polymerisates aus

a) 2 bis 100 Gew.-% eines Monomeren der allgemeinen Formel I,

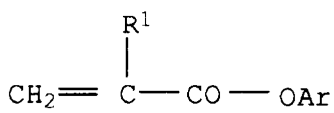

I

in der

$R^1$ Wasserstoff oder einen $C_1$-$C_4$-Alkylrest bedeutet und

Ar ausgewählt ist aus der Gruppe bestehend aus Phenyl-, $\alpha$-, $\beta$-Naphthyl-, Diphenyl-, p-Benzoylphenyl-, p-($\omega$-Phenylalkyl)estern der Acryl- und Methacrylsäure, wobei die aromatischen Kerne gewünschtenfalls mit Alkyl-, Alkoxy-, Nitro-, Nitrilgruppen oder Halogenatomen substituiert sein können und

b) 0 bis 98 Gew.-% eines Monomeren der allgemeinen Formel II,

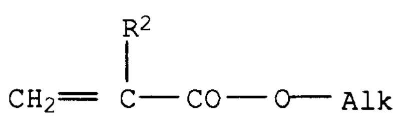

II

in der

$R^2$ einen $C_1$-$C_4$-Alkylrest und

Alk einen $C_1$-$C_8$-Alkylrest bedeutet,

oder aus Gemischen dieser Monomeren, sowie

c) 0 bis 5 Gew.-% weiterer radikalisch polymerisierbarer Monomere (Monomere III) zusetzt.

**2.** Verfahren zur Herstellung von thermoplastischen Formmassen nach Anspruch 1, dadurch gekennzeichnet, daß man zusätzlich übliche Füllstoffe und sonstige Hilfsmittel verwendet.

**Claims**

**Claims for the following Contracting States : BE, DE, FR, GB, IT, NL, SE**

1. A thermoplastic molding material comprising from 20 to 98% by weight of polyvinyl chloride and from 2 to 80% by weight of a polymer of
   a) from 2 to 100% by weight of a monomer of the formula I

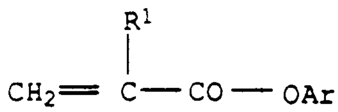

I

where
   $R^1$ is hydrogen or $C_1$-$C_4$-alkyl and
   Ar is selected from the group consisting of phenyl, $\alpha$-naphthyl, $\beta$-naphthyl, diphenyl, p-benzoylphenyl and p-($\omega$-phenylalkyl) esters of acrylic and methacrylic acid, where the aromatic nuclei may, if desired, be substituted by alkyl, alkoxy, nitro or nitrile groups or halogen atoms, and

   b) from 0 to 98% by weight of a monomer of the formula II

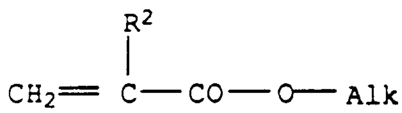

II

where
   $R^2$ is $C_1$-$C_4$-alkyl and
   Alk is $C_1$-$C_8$-alkyl,
   or of a mixture of these monomers, and

   c) from 0 to 5% by weight of further monomers which can be subjected to free radical polymerisation (monomers III).

2. A thermoplastic molding material as claimed in claim 1, additionally containing conventional fillers and other assistants.

3. A process for the preparation of a thermoplastic molding material comprising from 20 to 98% by weight of polyvinyl chloride, wherein from 2 to 80% by weight of a polymer of
   a) from 2 to 100% by weight of a monomer of the formula I

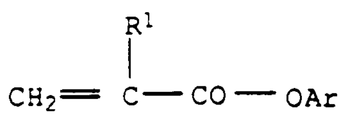

I

where
   $R^1$ is hydrogen or $C_1$-$C_4$-alkyl and
   Ar is selected from the group consisting of phenyl, $\alpha$-naphthyl, $\beta$-naphthyl, diphenyl, p-benzoylphenyl and p-($\omega$-phenylalkyl) esters of acrylic and methacrylic acid, where the aromatic nuclei may, if desired, be substituted by alkyl, alkoxy, nitro or nitrile groups or halogen atoms, and

b) from 0 to 98% by weight of a monomer of the formula II

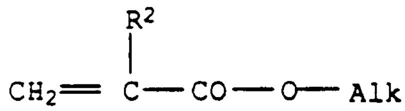

II

where
$R^2$ is $C_1$-$C_4$-alkyl and
Alk is $C_1$-$C_8$-alkyl,
or of a mixture of these monomers, and
c) from 0 to 5% by weight of further monomers which can be subjected to free radical polymerization (monomers III)
are added to this molding material.

**4.** A process for the preparation of a thermoplastic molding material as claimed in claim 3, wherein conventional fillers and other assistants are additionally used.

**5.** Use of a thermoplastic molding material as claimed in claim 1 or 2 for the production of moldings, with the exception of polarization films.

**Claims for the following Contracting State : ES**

**1.** A process for the preparation of a thermoplastic molding material comprising from 20 to 98% by weight of polyvinyl chloride, wherein from 2 to 80% by weight of a polymer of
a) from 2 to 100% by weight of a monomer of the formula I

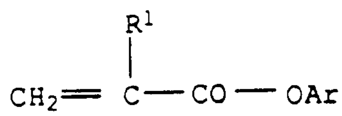

I

where
$R^1$ is hydrogen or $C_1$-$C_4$-alkyl and
Ar is selected from the group consisting of phenyl, α-naphthyl, β-naphthyl, diphenyl, p-benzoylphenyl and p-(ω-phenylalkyl) esters of acrylic and methacrylic acid, where the aromatic nuclei may, if desired, be substituted by alkyl, alkoxy, nitro or nitrile groups or halogen atoms, and
b) from 0 to 98% by weight of a monomer of the formula II

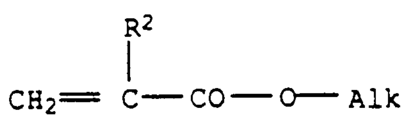

II

where
$R^2$ is $C_1$-$C_4$-alkyl and
Alk is $C_1$-$C_8$-alkyl,
or of a mixture of these monomers, and
c) from 0 to 5% by weight of further monomers which can be subjected to free radical polymerization (monomers III)
are added to this molding material.

2. A process for the preparation of a thermoplastic molding material as claimed in claim 1, wherein conventional fillers and other assistants are additionally used.

**Revendications**

**Revendications pour les Etats contractants suivants : BE, DE, FR, GB, IT, NL, SE**

1. Matières à mouler thermoplastiques, constituées de 20 à 98% en poids de poly(chlorure de vinyle) et de 2 à 80% en poids d'un polymère composé de

   a) 2 à 100% en poids d'un monomère de la formule générale I

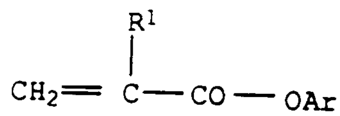

I

   dans laquelle

   $R^1$ représente un atome d'hydrogène ou un radical alkyle en $C_1$-$C_4$ et

   Ar est choisi dans le groupe formé par les esters phényliques, alpha-naphtyliques, bêta-naphtyliques, diphényliques, p-benzoylphényliques, p-(oméga-phénylalkyliques) des acides acrylique et méthacrylique, où les noyaux aromatiques peuvent être substitués, si cela se révèle souhaitable, par des radicaux alkyle, alcoxy, nitro, nitrile et

   b) 0 à 98% en poids d'un monomère de la formule générale II

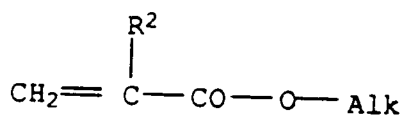

II

   dans laquelle

   $R^2$ représente un radical alkyle en $C_1$-$C_4$ et Alk représente un radical alkyle en $C_1$-$C_8$,

   ou de mélanges de ces monomères, comme aussi

   c) 0 à 5% en poids d'autres monomères polymérisables par voie radicalaire (monomères III).

2. Matières à mouler thermoplastiques suivant la revendication 1, caractérisées en ce qu'elles contiennent complémentairement des charges usuelles et divers adjuvants.

3. Procédé de fabrication de matières à mouler thermoplastiques à base de 20 à 98% en poids de poly-(chlorure de vinyle), caractérisé en ce que l'on ajoute à ces matières à mouler 2 à 80% en poids d'un polymère composé de

   a) 2 à 100% en poids d'un monomère de la formule générale I

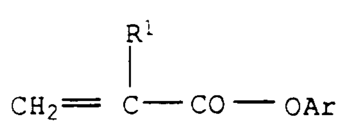

I

   dans laquelle

   $R^1$ représente un atome d'hydrogène ou un radical alkyle en $C_1$-$C_4$ et

   Ar est choisi dans le groupe formé par les esters phényliques, alpha-naphtyliques, bêta-naphtyliques, diphényliques, p-benzoylphényliques, p-(oméga-phénylalkyliques) des acides acrylique et méthacrylique, où les noyaux aromatiques peuvent être substitués, si cela se révèle souhaitable, par des radicaux alkyle, alcoxy, nitro, nitrile et

b) 0 à 98% en poids d'un monomère de la formule générale II

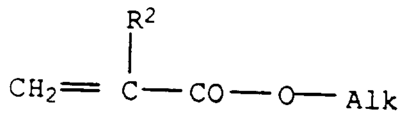

II

dans laquelle
$R^2$ représente un radical alkyle en $C_1$-$C_4$ et
Alk représente un radical alkyle en $C_1$-$C_8$,
ou de mélanges de ces monomères, comme aussi
c) 0 à 5% en poids d'autres monomères polymérisables par voie radicalaire (monomères III).

**4.** Procédé de fabrication de matières à mouler thermoplastiques suivant la revendication 3, caractérisé en ce que l'on utilise complémentairement des charges habituelles et divers adjuvants.

**5.** Utilisation des matières à mouler thermoplastiques suivant la revendication 1 ou 2 en vue de la fabrication de corps ou articles moulés, à l'exception de feuilles de polarisation.

**Revendications pour l'Etat contractant suivant : ES**

**1.** Procédé de fabrication de matières à mouler thermoplastiques à base de 20 à 98% en poids de poly-(chlorure de vinyle), caractérisé en ce que l'on ajoute à ces matières à mouler 2 à 80% en poids d'un polymère composé de
a) 2 à 100% en poids d'un monomère de la formule générale I

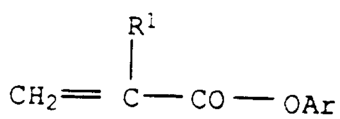

I

dans laquelle
$R^1$ représente un atome d'hydrogène ou un radical alkyle en $C_1$-$C_4$ et
Ar est choisi dans le groupe formé par les esters phényliques, alpha-naphtyliques, bêta-naphtyliques, diphényliques, p-benzoylphényliques, p-(oméga-phénylalkyliques) des acides acrylique et méthacrylique, où les noyaux aromatiques peuvent être substitués, si cela se révèle souhaitable, par des radicaux alkyle, alcoxy, nitro, nitrile et
b) 0 à 98% en poids d'un monomère de la formule générale II

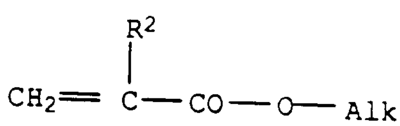

II

dans laquelle
$R^2$ représente un radical alkyle en $C_1$-$C_4$ et Alk représente un radical alkyle en $C_1$-$C_8$,
ou de mélanges de ces monomères, comme aussi
c) 0 à 5% en poids d'autres monomères polymérisables par voie radicalaire (monomères III).

**2.** Procédé de fabrication de matières à mouler thermoplastiques suivant la revendication 1, caractérisé en ce que l'on utilise complémentairement des charges habituelles et divers adjuvants.